# EUROPEAN PATENT APPLICATION

(11) **EP 3 093 787 A1**
(43) Date of publication of application: **16.11.2016**
(21) Application number: 16159635.8
(22) Date of filing: 10.03.2016
(51) Int. Cl.: G06F 21/52

(54) **APPARATUS AND METHOD FOR DETECTING UNSTEADY FLOW OF PROGRAM**

(30) Priority: 11.05.2015 KR 20150065327
(71) Applicant: BlackFort Security INC., Seoul 06233 (KR); Park, Ji Hoon, Seoul 06571 (KR); Oh, Jae Ryoung, Seoul 01690 (KR); Park, Ji Yo, Seoul 06245 (KR)
(72) Inventor: PARK, Ji Hoon, Seoul 06571 (KR); OH, Jae Ryoung, Seoul 01690 (KR); PARK, Ji Yo, Seoul 06245 (KR)
(74) Representative: Kuhnen & Wacker

(57) **Abstract**

Disclosed herein is an apparatus and method for detecting unsteady flow of a program to protect against distribution of malicious codes through vulnerabilities of the program by detecting unsteady flow occurring in the program. The apparatus for detecting unsteady flow of a program includes a program flow interrupter for interrupting a flow of a program being performed in a process; a program collector for collecting the program interrupted by the program flow interrupter; an unsteady flow determiner for determining unsteady flow in the program collected by the program collector; and an unsteady flow detector for detecting unsteady flow based on the determination result of the unsteady flow determiner.

## Description

### BACKGROUND OF THE INVENTION

### 1. Field of the Invention

The present invention relates to detecting unsteady flow of a program and, more particularly, to an apparatus and method for detecting unsteady flow of a program, whereby the apparatus and method can detect an unsteady flow occurring in all the processes operating under an operating system including Windows^{®}.

### 2. Description of the Related Art

Recently, hackers have begun to find vulnerabilities in commercial programs and distribute a malicious code through the vulnerabilities.

This is because the security awareness of people today who use computers is better than before, so direct distribution of malicious code (executable program, e.g., a file with extension .exe) does not work well, thus making it difficult for such an approach to have significant ramifications.

Distribution of malicious code using a vulnerability in a commercial program, however, is easy because the malicious code is executed when the people who use computers visit a particular website or open a document file having extensions such as .hwp, .pdf., thus such an approach has significant ramifications.

In the case of distributing malicious code using vulnerabilities in programs, a program attacked through its vulnerability may operate differently than usual.

For example, if a hacker attempts to exploit a vulnerability of the Hancom Office^{®} program, he/she distributes a document file having the extension '.hwp', which belongs to the Hancom Office^{®} Hangul (Korean) program, the distributed document file with the extension '.hwp' being a malicious document file that contains a code (hereinafter, referred to as 'malicious shell code') to download a malicious code that substantially performs malicious activities from a separate malicious server and executes the malicious code.

When a user executes the malicious *.hwp file, the Hancom Office® program loses control to the malicious shell code contained in the malicious '*.hwp' file due to the vulnerability attack while reading the malicious '*.hwp' file, and the malicious shell code downloads a malicious code to infect the computer of the user.

In the above example, it can be seen that there is a point in the Hancom Office^{®} program, which had thus far been working well, where control is taken over by the malicious shell code due to the vulnerability attack.

That is, it can be seen that 'unsteady flow' has occurred, which is not intended by the developer of the Hancom Office^{®} program.

For reference, the shell code is a set of instruction codes that are executable in a target system by a cyber attack.

The shell code plays various roles, for example, controlling the attacked system to be remotely connected or to download and execute a certain malicious code.

### [Prior Art Documents]

### [Patent Documents]

(Patent Document 1)
Korean Patent No. 10-1473726 titled "Apparatus and Method for Detecting Shell Code Concealment and Intrusion"

### SUMMARY OF THE INVENTION

Accordingly, The present invention has been made keeping in mind the above problems occurring in the prior art, and an object of the present invention is to provide an apparatus and method for detecting unsteady flow of a program to prevent distribution of malicious codes through a vulnerability of the program by detecting the unsteady flow occurring in the program.

In accordance with an aspect of the present invention, an apparatus for detecting unsteady flow of a program is provided. The apparatus includes a program flow interrupter for interrupting a flow of a program being performed in a process; a program collector for collecting the program interrupted by the program flow interrupter; an unsteady flow determiner for determining unsteady flow in the program collected by the program collector; and an unsteady flow detector for detecting unsteady flow based on the determination result of the unsteady flow determiner.

The apparatus may output all unsteady flows occurring in the process onto a monitor as a warning, and log-transfer the unsteady flows to a database for collecting unsteady flows.

The unsteady flow determiner may determine an instance where code execution occurs in a memory region having no execution authority, an instance where code execution occurs in a region in which code is executable but must not be executed, and an instance where code execution flow is not moved in function blocks as unsteady flows.

The unsteady flow detector may detect an instance where code execution occurs in a memory region having no execution authority, an instance where code execution occurs in a region in which code is executable but must not be executed, and an instance where code execution flow is not moved in function blocks as unsteady flows, output the instances onto a monitor as warnings, and log-transfer the instances to a database for collecting unsteady flows.

The unsteady flow determiner for determining the unsteady flow may use a scheme to handle all exceptions and a scheme to hook and monitor an Application Program Interface (API) to determine unsteady flow.

The scheme to handle all exceptions may handle all unsteady flows (exceptions) if code execution occurs while Data Execution Prevention (DEP) is set in a region in which code must not be executed.

In the instance where code execution occurs in a region in which code is executable but must not be executed, since the code executable region has no exception even when a shell code is actually executed, all the unsteady flows (exceptions) are handled.

The scheme to hook and monitor an API may be used for an instance where code execution occurs in a region in which code is executable but must not be executed and an instance where code execution flow is not moved in function blocks.

In accordance with another aspect of the present disclosure, a method for detecting unsteady flow of a program is provided. The method includes loading a process to execute a program; loading an unsteady flow detection device for detecting unsteady flow into the process as a protection module for protecting the process; installing a process interrupter of the unsteady flow detection device before executing the process; collecting exception information if the process is executed; assessing the collected exception information and determining whether unsteady flow is detected; log-transferring unsteady flow information, warning of the unsteady flow, and storing the unsteady flow information in a database, by the unsteady flow detection device, if the unsteady flow is detected; and stopping the process from which the unsteady flow is detected.

Collecting exception information may include collecting an instance where code execution occurs in a memory region having no execution authority, an instance where code execution occurs in a region in which code is executable but must not be executed, and an instance where code execution flow is not moved in function blocks.

Collecting exception information may include using a scheme to handle all exceptions and a scheme to hook and monitor an Application Program Interface (API) to determine unsteady flow.

The scheme to handle all exceptions may handle all unsteady flows (exceptions) if code execution occurs while Data Execution Prevention (DEP) is set in a region in which code must not be executed.

In the instance where code execution occurs in a region in which code is executable but must not be executed, since the code executable region has no exception even when a shell code is actually executed, all the unsteady flows (exceptions) are handled.

The scheme to hook and monitor an API may be used for an instance where code execution occurs in a region in which code is executable but must not be executed and an instance where code execution flow is not moved in function blocks.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a view for explaining points for detection of unsteady flow in a program, according to an embodiment of the present invention;
FIG. 2 illustrates a normal function call flow in a general program;
FIG. 3 illustrates an abnormal function call flow in a general program;
FIG. 4 is a view for explaining an apparatus for detecting unsteady flow of a program, according to an embodiment of the present invention; and
FIG. 5 is a flowchart illustrating a method for detecting unsteady flow of a program, according to an embodiment of the present invention.

### DESCRIPTION OF THE PREFERRED EMBODIMENTS

Reference will now be made in detail to embodiments, examples of which are illustrated in the accompanying drawings, wherein like reference numerals refer to the like elements throughout.

It will be understood that terms, such as those defined in commonly used dictionaries, should be interpreted as having a meaning that is consistent with their meaning in the context of the relevant art and will not be interpreted in an idealized or overly formal sense unless expressly so defined herein. Technological content well-known in the art or not directly related to the present invention is omitted in the following description. Through the omission of content that might otherwise obscure the subject matter of the present invention, the subject matter will be understood more clearly.

First, not a method to be applied only to a particular process but a method to be applied to all the processes that operate under the Windows® operating system will now be described.

For this, a difference between 'unsteady flow' and 'unsteady behavior' that may occur in a program will be explained first.

An unsteady flow that occurs in a program means a code flow that must not occur in the program.

An unsteady behavior means a behavior that must not occur in the program.

For example, if a shell code is executed in a region disallowing code execution, it is considered an unsteady flow while the behavior of the shell code executing a program, for example, a calculator, is considered an unsteady behavior.

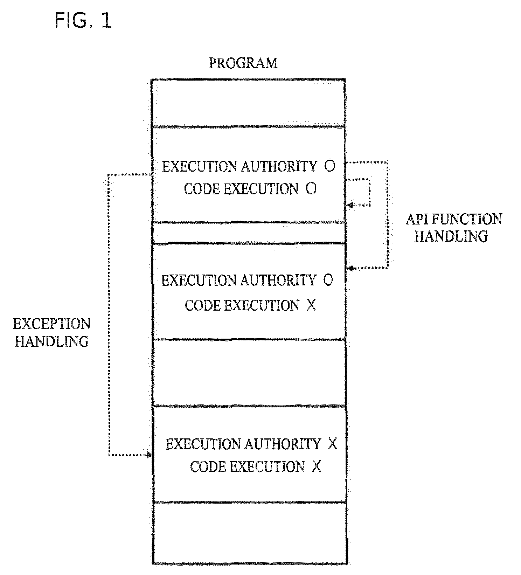

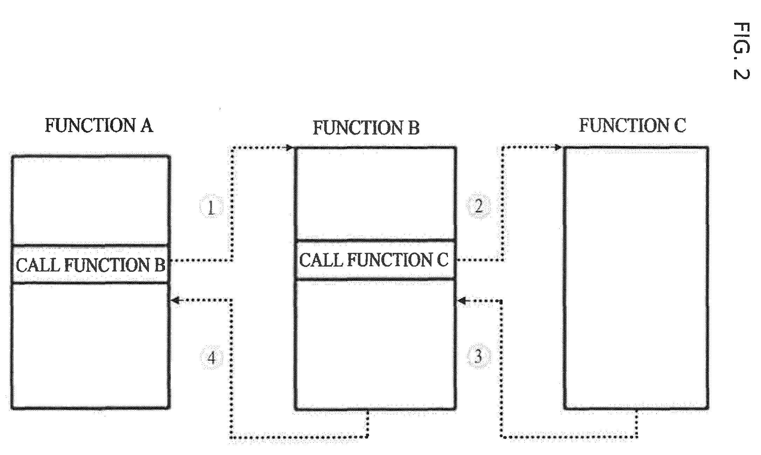

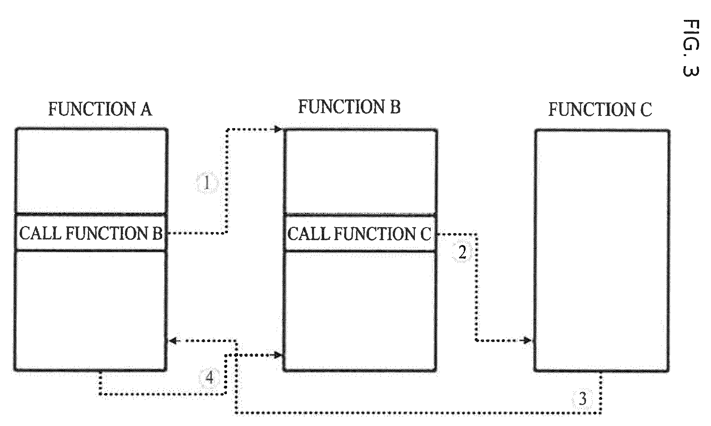

FIG. 1 is a view for explaining a point at which an unsteady flow is detected in a program, according to an embodiment of the present invention, FIG. 2 is a view for explaining a normal function call flow in a general program, and FIG. 3 is a view for explaining an abnormal function call flow in a general program.

To understand this, instances of unsteady flow that might occur in a program will first be defined.

Unsteady flow may be largely divided into three instances as shown in FIG. 1.

The first instance is where code execution occurs in a memory region having no execution authority.

The second instance is where code execution occurs in a region in which code is executable but must not be executed.

The third instance is where code execution flow is not moved in function blocks.

As for the first instance where code execution occurs in a memory region having no execution authority, the memory region in which code execution is not possible includes a non-allocated memory region and a memory region allocated but having not execution authority.

As for the non-allocated memory region, even a shell code is not allowed to be executed, so the shell code may be ignored.

However, if a shell code is executed in the memory region allocated but having no execution authority, the shell code should not be ignored. It is because, as for e.g., a program having no attribute of Data Execution Prevention (DEP) provided by the Windows®, code execution is possible even in the memory region having no execution authority. Thus, if a shell code is executed in the memory region having no execution authority, it may be detected as unsteady flow.

Next, as for the second instance where code execution occurs in a region in which code is executable but must not be executed, there may be memory regions that are normally allocated and which even have code execution authority, but in which code must not be executed.

For example, if code execution occurs in a memory region dynamically allocated for a program and having execution authority, code execution is normally performed but a shell code may be executed through vulnerability attacks in the memory region, so if an Application Programming Interface (API) function call mainly used in the shell code occurs, this may be defined as unsteady flow.

Lastly, as for the instance where code execution flow is not moved in function blocks, a program includes a set of functions that perform the respective functions, and the program may operate as in FIG. 2 when it is in normal flow.

In a normal function call flow, as shown in FIG. 2, function A internally calls function B. Next, the function B internally calls function C. The function C completes operation and then returns to a location in the function B, which indicates a command subsequent to calling the function C.

The function B then completes operation and then returns to a location in the function A, which indicates a command subsequent to calling the function B.

The program operates this way in a normal flow, but after the control is taken by a malicious flow due to a vulnerability attack, the program may abnormally operate as shown in FIG. 3.

In the abnormal function call flow as shown in FIG. 3, it can be seen that execution of functions flows abnormally. The abnormal code execution flow occurring as in FIG. 3 may be defined as 'unsteady flow', and even in this case, when an API function mainly used by a shell code is called, this may be defined as unsteady flow.

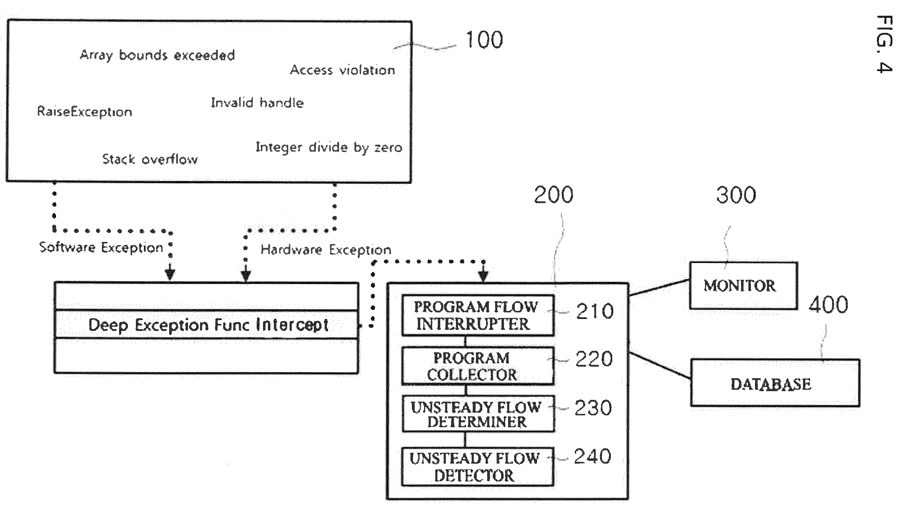

FIG. 4 is a view for explaining an apparatus for detecting unsteady flow of a program, according to an embodiment of the present invention.

Referring to FIG. 4, the apparatus for detecting unsteady flow of a program may include an unsteady flow detection device 200 for hooking an unsteady flow of a process 100 before dispatching to log the unsteady flow into software and hardware executed in the process 100 in which various programs are loaded and executed, sending it to a database, and warning of it to the outside. The unsteady flow detection device 200 includes a program flow interrupter 210 for interrupting the flow of a program being executed in the process 100, a program collector 220 for collecting the interrupted program, an unsteady flow determiner 230 for determining an unsteady flow in the collected program, and an unsteady flow detector 240 for detecting an unsteady flow based on the determination result from the unsteady flow determiner 230.

A method for controlling and monitoring the aforementioned three instances or events, which are defined as unsteady flows, will now be described. It is noted that, when the respective events occur, they should not be simply prevented but may be handled to obtain related information.

Handling the events may use a scheme to handle all the unsteady flow (exception) or a scheme to hook and monitor an API, as shown in FIG. 1.

First, in the scheme to handle all the unsteady flow (exception), for an event where code execution occurs in a memory region having no execution authority, if a program starts, the aforementioned DEP attribute provided by the Windows® is set without condition to prevent the code execution.

After this, if code execution occurs in a memory region having no execution authority, hardware exception occurs, which causes the crash of the program. However, in the embodiment of the present invention, to handle all the unsteady flow (exception) occurring in a program, the unsteady flow detection device 200 intercepts the unsteady flow (exception) to handle them first. The intercepted unsteady flow information is output as a warning onto a monitor 300, and logged into a database 400 for collecting the unsteady flow.

In case of a general program operating under Windows®, if a hardware or software exception occurs, it is first entered into a function called 'KiUserExceptionDispatcher'. However, the function has a bit different structure depending on operating system versions and has no function prologue, thus intercepting and universally handling the function may not be reliable. Accordingly, intercepting a more fundamental (deeper) function than the aforementioned function may make it possible to reliably handle all the exceptions. This is dubbed as 'Deep Hook Exception intercept'.

The existing programs are often used by using API functions provided in the Windows® to register an exception routine for exception handling. However, in this case, the order of priority becomes lower than execution handling using grammar like '_try_ exception' on the code, and thus all the exceptions may not be handled and event logging may not work.

Returning to a state of being able to handle the exception, whether it is an unsteady flow occurring by a vulnerability attack may be determined based on exception codes and information relating to the exception yielded by the system to an exception handler.

On the other hand, the scheme to hook and monitor an API may be used for an instance where code execution occurs in a region in which code is executable but must not be executed and an instance where code execution flow is not moved in function blocks.

First, in the instance where code execution occurs in a region in which code is executable but must not be executed, since the code executable region has no exception even when a shell code is actually executed, a scheme different from one to handle all the unsteady flow (exception) needs to be used.

However, handling commands interpreted by the CPU, line by line, causes huge overhead and may thus be practically impossible. Therefore, by monitoring calls of API functions mainly used in the shell code, if a corresponding function is called and brought in a region where code must not be executed, it is determined to be unsteady flow that has occurred due to a vulnerability attack.

In the method for hooking and monitoring an API in the instance where code execution flow is not moved in function blocks, no exception occurs because even an abnormal code execution flow occurs in the code executable region as in FIG. 2. Because of this, by monitoring calls of API functions mainly used in the shell code, if a corresponding function is called and the flow of the function call has an abnormal flow, it is determined to be unsteady flow.

A handling method to hook and monitor API functions is commonly used in the security area, so the detailed method is omitted herein.

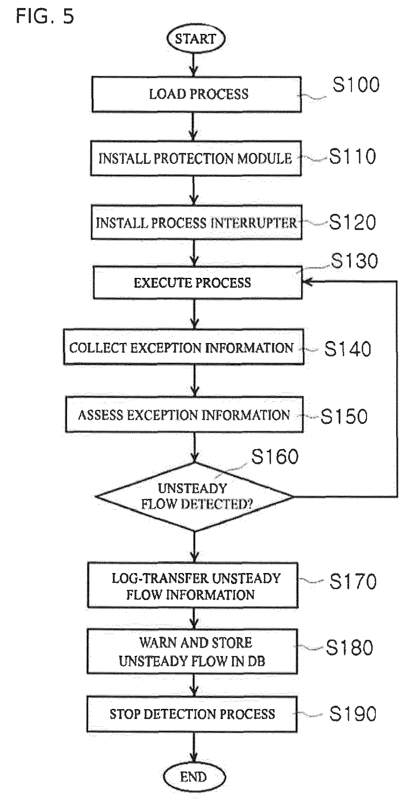

FIG. 5 is a flowchart illustrating a method for detecting unsteady flow of a program, according to an embodiment of the present invention.

The method for detecting unsteady flow of a program includes loading a process in step S100, as shown in FIG. 5.

The unsteady flow detection device 200, which is a protection module in accordance with an embodiment of the present invention, is then loaded into the process, in step S110.

Prior to executing the process, an interrupter for interrupting the program flow is installed, in step S120.

The process is then executed in step S130, and exception information is collected in step S140.

The exception information is for an instance where code execution occurs in a memory region having no execution authority, an instance where code execution occurs in a region in which code is executable but must not be executed, and an instance where code execution flow is not moved in function blocks.

Based on the collection, the exception information is assessed in step S150, and it is determined whether unsteady flow is detected in step S160.

If it is determined that the unsteady flow is detected in step S160, information regarding the unsteady flow is log-transferred in step S170, the unsteady flow is warned of through e.g., the monitor 300, and information regarding the unsteady flow is stored in the database 400.

The process in which the unsteady flow is detected is then ended, in step S190.

The present invention has the following advantages:
First, attacking a program by distributing a malicious code using a vulnerability of the program takes normal control of the program and thus makes the program flow in an abnormal direction, but in the present invention, points from which abnormal flow (or unsteady flow) might occur due to vulnerability attack may be monitored to prevent many possible vulnerability attacks.
Second, the present invention may effectively prevent zero-day attacks in particular, which are used by some hackers to distribute malicious codes.
Third, the present invention may prevent vulnerability attacks that might occur in three regions, a region having no execution authority and disallowing code execution, a region having execution authority but disallowing code execution, and a region having execution authority and allowing code execution, thereby cutting off unsteady flow occurring in the program and reducing the ramifications of the unsteady flow.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An apparatus for detecting unsteady flow of a program, the apparatus comprising:
a program flow interrupter for interrupting a flow of a program being performed in a process;
a program collector for collecting the program interrupted by the program flow interrupter;
an unsteady flow determiner for determining unsteady flow in the program collected by the program collector; and
an unsteady flow detector for detecting unsteady flow based on the determination result of the unsteady flow determiner.

2. The apparatus of claim 1,
wherein the apparatus outputs all unsteady flows occurring in the process onto a monitor as a warning, and log-transfers the unsteady flows to a database for collecting unsteady flows.

3. The apparatus of claim 1,
wherein the unsteady flow determiner determines an instance where code execution occurs in a memory region having no execution authority, an instance where code execution occurs in a region in which code is executable but must not be executed, and an instance where code execution flow is not moved in function blocks as unsteady flows.

4. The apparatus of claim 1,
wherein the unsteady flow detector detects an instance where code execution occurs in a memory region having no execution authority, an instance where code execution occurs in a region in which code is executable but must not be executed, and an instance where code execution flow is not moved in function blocks as unsteady flows, outputs the instances onto a monitor as warnings, and log-transfers the instances to a database for collecting unsteady flows.

5. The apparatus of claim 1,
wherein the unsteady flow determiner for determining the unsteady flow uses a scheme to handle all exceptions and a scheme to hook and monitor an Application Program Interface (API) to determine unsteady flow.

6. The apparatus of claim 5,
wherein the scheme to handle all exceptions handles all unsteady flows (exceptions) if code execution occurs while Data Execution Prevention (DEP) is set in a region in which code must not be executed.

7. The apparatus of claim 5,
wherein the scheme to hook and monitor the API is used for an instance where code execution occurs in a region in which code is executable but must not be executed and an instance where code execution flow is not moved in function blocks.

8. A method for detecting unsteady flow of a program, the method comprising:
loading a process to execute a program;
loading an unsteady flow detection device for detecting unsteady flow into the process as a protection module for protecting the process;
installing a process interrupter of the unsteady flow detection device before executing the process;
collecting exception information if the process is executed;
assessing the collected exception information and determining whether unsteady flow is detected;
log-transferring unsteady flow information, warning of the unsteady flow, and storing the unsteady flow information in a database, by the unsteady flow detection device, if the unsteady flow is detected; and
stopping the process from which the unsteady flow is detected.

9. The method of claim 8,
wherein collecting the exception information comprises collecting an instance where code execution occurs in a memory region having no execution authority, an instance where code execution occurs in a region in which code is executable but must not be executed, and an instance where code execution flow is not moved in function blocks.

10. The method of claim 8,
wherein collecting exception information comprises using a scheme to handle all exceptions and a scheme to hook and monitor an Application Program Interface (API) to determine unsteady flow.

11. The method of claim 10,
wherein the scheme to handle all exceptions handles all unsteady flows (exceptions) if code execution occurs while Data Execution Prevention (DEP) is set in a region in which code must not be executed.

12. The method of claim 10,
wherein the scheme to hook and monitor the API is used for an instance where code execution occurs in a region in which code is executable but must not be executed and an instance where code execution flow is not moved in function blocks.
